# EUROPEAN PATENT APPLICATION

(11) **EP 2 026 562 A2**
(43) Date of publication of application: **18.02.2009**
(21) Application number: 08158473.2
(22) Date of filing: 18.06.2008
(51) Int. Cl.: H04N 5/21

(54) **Video display apparatus and noise removal method thereof**

(30) Priority: 02.08.2007 KR 20070077783
(71) Applicant: Samsung Electronics Co., Ltd., Suwon-si, Gyeonggi-do 442-742 (KR)
(72) Inventor: Jun, Byung-jo, Gyeonggi-do (KR)
(74) Representative: Davies, Robert Ean

(57) **Abstract**

A video display apparatus and a noise removal method thereof are provided. The video display apparatus includes a video processor (115) which removes noise from an input video; and a controller (140) which divides the input video into a plurality of areas (210,220) according to settings, and controls the video processor to remove noise from each of the plurality of areas.

## Description

Apparatuses and methods consistent with the present invention relate to removing noise in a video display apparatus, and more particularly, but not exclusively, to removing noise from video comprising areas in which there is a difference in motion.

Video display apparatuses generally display video corresponding to broadcast signals received from external sources via antennas or cables. Examples of video display apparatuses include televisions (TVs), or portable devices having a digital multimedia broadcasting (DMB) function.

In such video display apparatuses, if the signal to noise ratio of the received broadcast signal is low, noise in the received broadcast signal may increase. In order to remove such noise, video display apparatuses perform the same noise removal process with respect to the entire video, and thus the noise of an area with little motion may be removed but noise of an area with more motion may still remain.

For example, if a video such as news is displayed, an area with little motion such as an image of an anchorperson may be displayed in the center, and an area with more motion such as captions in which simple information such as the day's news headlines or stock market information scrolls, may be displayed on the bottom. Accordingly, the area with more motion and the area with little motion may be displayed on a single video, and the same noise removal process may be performed with respect to the areas of the video. Therefore, noise may be effectively removed from the area with little motion. However, in the area with more motion, that is, in the area on which captions are displayed, the captions may be displayed as if they are being dragged or damaged due to an excessive noise removal process.

Embodiments of the present invention aim to overcome the above disadvantages and other disadvantages not described above. Also, embodiments of the present invention are not required to overcome the disadvantages described above, and an embodiment of the present invention may not overcome any of the problems described above.

Embodiments of the present invention aim to provide a video display apparatus and a method for removing noise thereof, in which a video is divided into a plurality of areas and a noise removal process is performed with respect to each of the plurality of areas, so that noise may be effectively removed.

According to an aspect of the present invention, there is provided a video apparatus comprising a video processor which removes noise from an input video; and a controller which divides the input video into a plurality of areas according to a user's settings, and controls the video processor to remove noise from each of the plurality of areas.

The video processor may detect motion in each of the plurality of areas, and the controller may control the video processor to remove noise according to the detected motion.

The plurality of areas may comprise a first area where there is expected to be little motion and a second area where there is expected to be more motion.

The first area may be an area on which captions do not scroll across a screen, and the second area may be an area on which captions scroll across the screen.

If it is determined that the first area displays greater motion than the second area, the controller may control the video processor to perform the same noise removal process with respect to the first area and second area.

If it is determined that the first area displays less motion than the second area, the controller may control the video processor to perform different noise removal processes with respect to the first area and second area.

According to another aspect of the present invention, there is provided a method for removing noise, the method comprising dividing an input video into a plurality of areas according to a user's settings; and removing noise from each of the plurality of areas.

The method may further comprise detecting motion in each of the plurality of areas. The removing may comprise removing noise according to the detected motion.

The plurality of areas may comprise a first area where there is expected to be little motion and a second area where there is expected to be more motion.

The first area may be an area on which captions do not scroll across a screen, and the second area may be an area on which captions scroll across the screen.

The method may further comprise comparing the motion of the first area with that of the second area. The removing may comprise performing the same noise removal process with respect to the first area and second area, if it is determined that the first area displays greater motion than the second area.

The method may further comprise comparing the motion of the first area with that of the second area. The removing may comprise performing different noise removal processes with respect to the first area and second area, if it is determined that the first area displays less motion than the second area.

For a better understanding of the invention, and to show how embodiments of the same may be carried into effect, reference will now be made, by way of example, to the accompanying diagrammatic drawings in which:
FIG. 1 is a block diagram showing a video display apparatus having a noise removal function according to an embodiment of the present invention;
FIGS. 2A and 2B are views showing examples of divided video according to an embodiment of the present invention; and
FIG. 3 is a flowchart explaining a noise removal method according to an embodiment of the present invention.

Certain embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the embodiments of the present invention can be carried out without those specifically defined matters. Also, well-known functions or constructions are not described in detail since they would obscure the invention with unnecessary detail.

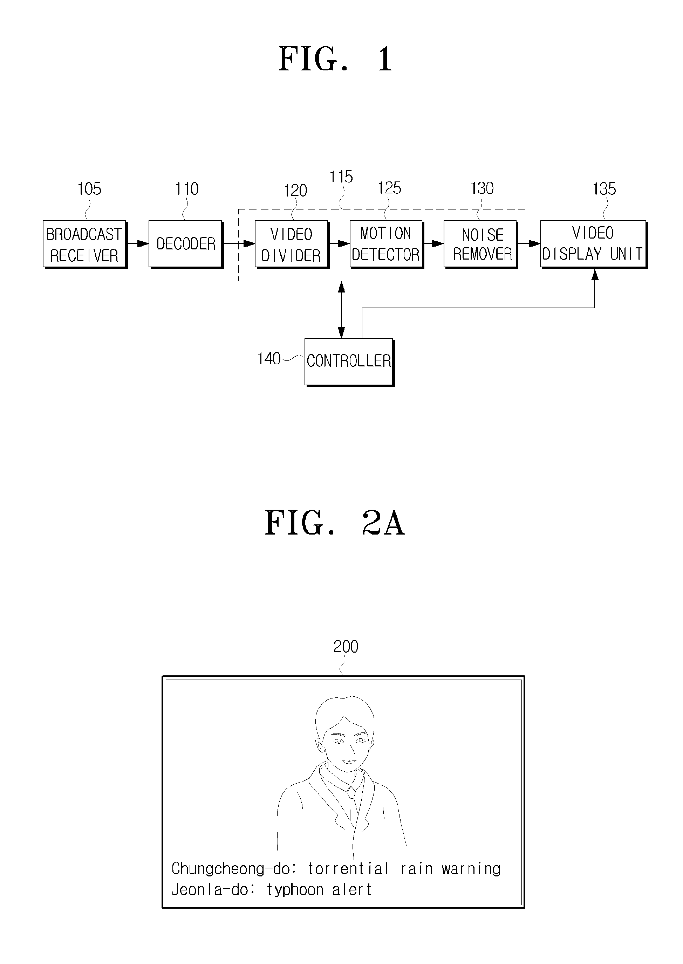

FIG. 1 is a block diagram showing a video display apparatus having a noise removal function according to an embodiment of the present invention.

The video display apparatus of FIG. 1 comprises a broadcast receiver 105, a decoder 110, a video processor 115, a video display unit 135 and a controller 140.

The broadcast receiver 105 tunes to a broadcast signal received via an antenna (not shown) or a broadcast cable (not shown), and demodulates the tuned broadcast signal.

If the broadcast signal output from the broadcast receiver 105 is divided into an audio signal, a video signal and an additional data signal by a broadcast separator (not shown) and if the divided signals are transferred to the decoder 110, the decoder 110 may decode the divided signals, namely, the audio signal, the video signal and the additional data signal.

The video processor 115 receives the decoded signals, namely, the audio signal, the video signal and the additional data signal, from the decoder 110, and processes the received signals so that video corresponding to the signals may be displayed on the video display unit 135. In particular, the video processor 115 may perform a noise removal process with respect to the signals. The video processor 115 comprises a video divider 120, a motion detector 125 and a noise remover 130.

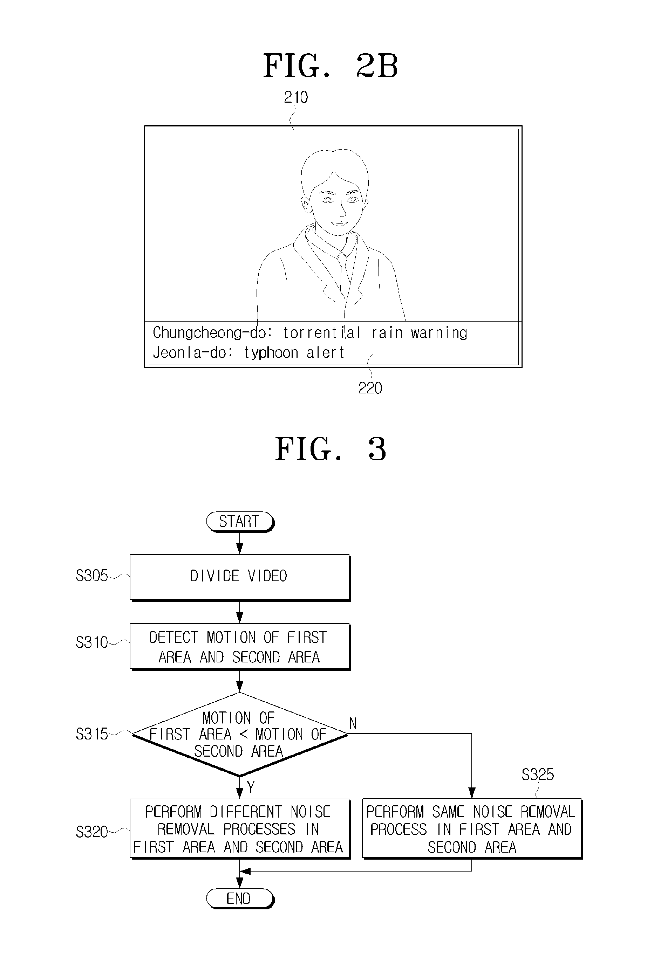

The video divider 120 divides an input video into a plurality of areas according to settings of a user. The user may set the video division so that the video may be divided into an area in which there is expected to be more motion and an area where there is expected to be little motion. This process for dividing the video will be described in detail with reference to FIGS. 2A and 2B which are views showing examples of divided video according to an exemplary embodiment of the present invention.

As shown in FIG. 2A, a single video 200 is displayed without division. A news anchorperson is displayed in the center of the video 200, and information such as weather reports, stock market information and brief news is displayed using captions on the bottom of the video 200.

FIG. 2B shows a single video which is divided into a first area 210, in which there is expected to be little motion, and a second area 220, in which there is expected to be more motion, that is, where captions will be displayed.

The ratio of the first area 210 to the second area 220 may change according to the settings of the user, and the video may be divided vertically or horizontally.

The motion detector 125 detects motion for each of the plurality of areas divided according to the user's settings by the video divider 120.

The noise remover 130 removes noise from video corresponding to each of the divided areas.

The video display unit 135 displays the videos corresponding to the areas from which noise is removed.

The controller 140 controls the entire operation of the video display apparatus. The controller 140 divides the input video into the plurality of areas according to the settings of the user, and controls the video processor 115 to remove noise for each of the plurality of areas.

Hereinafter, a method by which the video display apparatus of FIG. 1 having the noise removal function removes noise will be described in detail with reference to FIG. 3 which is a flowchart explaining a noise removal method according to an exemplary embodiment of the present invention.

The controller 140 divides the input video into the plurality of areas according to the settings of the user (S305). Specifically, the controller 140 divides the input video into the first area 210 in which there is expected to be little motion and the second area 220 in which there is expected to be more motion, according to the settings of the user.

The motion detector 125 detects motion in the first area 210 and the second area 220 (S310).

The controller 140 compares the detected motion of the first area 210 with the detected motion of the second area 220 (S315).

If it is determined that the first area 210 displays less motion than the second area 220 (S315-Y), the controller 140 may control the noise remover 130 to perform different noise removal processes with respect to the first area 210 and the second area 220 (S320).

Specifically, during the noise removal process, the controller 140 may control the noise removal process using a table capable of setting a noise removal level according to the motion of different areas of the video.

For example, if a predetermined area of the video has more motion (that is, displays more rapid motion), the noise removal level may be set to low through the table for setting the noise removal level, and if a predetermined area of the video has little motion (that is, displays slower motion), the noise removal level may be set to high using the table. Additionally, if a video has a medium degree of motion, that is, if a predetermined area of the video moves at a medium rate, the noise removal level may be set to medium using the table.

In this situation, the predetermined area of the video refers to an area where motion is detected, and a reference of the motion of the predetermined area may be changed according to the settings of the user.

Accordingly, the controller 140 may set the noise removal level of the first area 210 according to the motion in the first area 210, and may remove noise from the second area 220. In the same manner, the controller 140 may set the noise removal level of the second area 220 according to the motion in the second area 220, and may remove noise from the second area 220.

If it is determined that the first area 210 displays greater motion than the second area 220 (S315-N), the controller 140 may control the noise remover 130 to perform the same noise removal process with respect to the first area 210 and the second area 220 (S325).

In more detail, the controller 140 may set the noise removal level of the first area 210 and the second area 220 to the same level according to the motion of the first area 210, using the table capable of setting the noise removal level, and may then remove noise from the first area 210 and the second area 220.

In this embodiment of the present invention, if it is determined that the first area displays greater motion than the second area, the controller 140 may set the noise removal level of the first area and second area to the same level according to the motion of the first area. However, the noise removal level may be set according to the average motion value of the first area and second area according to the settings of the user.

As described above, according to an embodiment of the present invention, an input video is divided into a plurality of areas according to the settings of the user, and a noise removal process may be performed with respect to the plurality of areas, so that noise may be effectively removed from the video comprising the areas having different motion values. Therefore, it is possible to provide a user with high quality video.

The foregoing embodiments and advantages are merely exemplary and are not to be construed as limiting the present invention. The present teaching can be readily applied to other types of apparatuses. Also, the description of embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video display apparatus comprising:
a video processor (115) which removes noise from an input video; and
a controller (140) which divides the input video into a plurality of areas according to settings, and controls the video processor to remove noise from each of the plurality of areas.

2. The video display apparatus as claimed in claim 1, wherein the video processor (115) detects motion in each of the plurality of areas, and
the controller (140) controls the video processor to remove noise according to the motion detected by the video processor.

3. The video display apparatus as claimed in claim 1 or 2, wherein the plurality of areas comprise a first area (210) in which there is expected to be little motion and a second area (220) in which there is expected to be more motion.

4. The video display apparatus as claimed in claim 3, wherein the first area is an area on which captions do not scroll across a screen, and
the second area (220) is an area on which captions scroll across the screen.

5. The video display apparatus as claimed in claim 3 or 4, wherein the controller (140) controls the video processor (115) to perform a same noise removal process with respect to the first area (210) and the second area (220), if it is determined that the first area displays greater motion than the second area.

6. The video display apparatus as claimed in claim 3 or 4, wherein the controller (140) controls the video processor (115) to perform different noise removal processes with respect to the first area (210) and the second area (220), if it is determined that the first area displays less motion than the second area.

7. A method for removing noise, the method comprising:
dividing (S305) an input video into a plurality of areas according to settings; and
removing (S320,S325) noise from each of the plurality of areas.

8. The method as claimed in claim 7, further comprising:
detecting (S310) motion in each of the plurality of areas,
wherein the removing comprises removing noise according to the motion which is detected.

9. The method as claimed in claim 7 or 8, wherein the plurality of areas comprise a first area (210) in which there is expected to be little motion and a second area (220) in which there is expected to be more motion.

10. The method as claimed in claim 9, wherein the first area (210) is an area on which captions do not scroll across a screen, and
the second area (220) is an area on which captions scroll across the screen.

11. The method as claimed in claim 9 or 10, further comprising:
comparing (S315) motion of the first area with motion of the second area,
wherein the removing comprises performing (S325) a same noise removal process with respect to the first area and second area, if it is determined that the first area displays greater motion than the second area as a result of the comparing.

12. The method as claimed in claim 9 or 10, further comprising:
comparing (S315) the motion of the first area with that of the second area,
wherein the removing comprises performing (S320) different noise removal processes with respect to the first area and the second area, if it is determined that the first area displays less motion than the second area.
